# EUROPEAN PATENT SPECIFICATION

(11) **EP 1 360 858 B1**
(45) Date of publication and mention of the grant of the patent: **08.04.2015**
(21) Application number: 01976315.0
(22) Date of filing: 19.10.2001
(51) Int. Cl.: H04W 36/10, H04W 36/12, H04W 48/04

(54) **METHOD FOR DETERMINING WHETHER TO GRANT ACCESS OF A USER EQUIPMENT TO A RADIO ACCESS NETWORK**
VERFAHREN ZUM BESTIMMEN, OB EINEM BENUTZERGERÄT ZUGANG ZU EINEM FUNKZUGANGSNETZ GEWÄHRT WERDEN SOLL
PROCEDE PERMETTANT DE DETERMINER SI L'ACCES D'UN EQUIPEMENT UTILISATEUR A UN RESEAU D'ACCES RADIO DOIT ETRE AUTORISE

(30) Priority: 13.02.2001 US 268065 P
(43) Date of publication of application: 12.11.2003
(73) Proprietor: Telefonaktiebolaget LM Ericsson (publ), 164 83 Stockholm (SE)
(72) Inventor: STÜMPERT, Martin, 67691 Hochspeyer (DE); PERSSON, Bengt, S-168 66 Bromma (SE); WILLARS, Per, S-115 36 Stockholm (SE)
(74) Representative: Tonscheidt, Andreas
(86) International application number: PCT/EP2001/012121
(87) International publication number: WO 2002/065789

(56) References cited:
- EP-A- 1 065 904
- US-A- 5 862 480
- US-A- 5 983 108

## Description

### Technical field of the invention

The present invention relates to a method for determining whether to grant access of a user equipment to a radio access network in a present position of the user equipment within a communications system, the communications system comprising a control node handling services for the user equipment and an access node controlling the access network. A communication network, nodes and software programs embodying the invention are also described.

### Background of the invention

The radio access networks of customary mobile communication systems comprise one or several base stations for the wireless connection to the user equipment and an access node which controls the base stations and connects them to the core network of the communication system. The access node can be for example a base station controller (BSC) as defined in GSM or a radio network controller (RNC) for a base station subsystem according to UMTS (Universal Mobile Telecommunication System) specifications. The access node therefore administrates the resources of the radio access system which are required to provide services and connections to the user equipment which may be a mobile phone or another wireless terminal, e.g. a personal digital assistant or a laptop computer.

Typically the communications system comprises also control nodes handling services for the user equipment, e.g. for setting up user originating and terminating connections, short messages or location data handling of the user equipment. The control nodes are generally part of the core network of the communication system which can interconnect different access networks and which may provide further connections to external networks, e.g. a fixed telephone system or the Internet. Examples for the control nodes are an MSC (Mobile Services Switching Center) or an SGSN (Serving GPRS Support Node with GPRS being the General Packet Radio Service). The handling of services comprises for example the provision of routing information in reply to an initial address message requesting the set-up of a connection to a user equipment or storing information according to handover procedures of the user equipment between different radio base stations. For this purpose, the control node can exchange information with a home location register (HLR) or a visitor location register (VLR) which store subscription data as well as the present control node for the user equipment.

Especially to save money on network infrastructure, e.g. when a communication system is updated for a new access technology, it is advantageous if network operators can share parts of a network. For example, operators may share a UMTS network while for other parts of the communication system they may be competitors, e.g. for networks providing GSM (Global System for Mobile Communication) connections. Consequently, a wide variety of access restrictions may apply for home and roaming mobile users throughout the communication system. Also, different user groups in the home network may have different subscriptions which only authorize them for a subset of services. For roaming user equipment in idle mode location based services implemented in core network nodes can be used for access granting and restriction. However, no mechanism for shared networks and mobiles in connected mode exists so far. Therefore, users in connected mode can presently not be restricted from entering parts of a mobile communication system which is forbidden for their subscription.

### Summary and description of the invention

It is an object of the present invention to obviate the above disadvantages and provide a method for controlling the access of user equipment to a radio access system within a mobile communication system, which is effective and which is easy to implement.

According to the invention, the method described in claim 1 is performed. Furthermore, the invention comprises a communication network, a control node, an access node and a program unit as defined in claims 13 to 16. Advantageous embodiments are described in the dependent claims.

In the proposed method for determining an access grant of a user equipment to a radio access network in a present position of the user equipment within a communications system, the communications system comprises a control node handling services for the user equipment and an access node controlling the access network. The control node receives a request for service processing for the user equipment with an identification of the user equipment, typically an IMSI (International Mobile Subscriber Identity) or another identification which may be converted into an IMSI. The request can for example be an initial address message for setting up a connection to the user equipment, a set-up request for a connection originating from the user equipment, a request for sending a short message (SMS) or a message "relocation required".

The control node determines a subscriber group information for the user equipment according to the identification of the user equipment, i.e. it performs a classification of the user equipment identification according to subscriber groups with different access rights. For example, the classification can be based on stored roaming agreements for the operator or operators of the communication system. Particularly, the subscriber group information can correspond to an indication of a home operator of the subscriber as well as roaming agreements between the home operator and one or several operators operating the network which can be a shared network. Both for a network which is shared and for a network which is not shared, an operator may have different roaming agreements which allow access only to specific groups of home or roaming subscribers.

The subscriber group information is sent to the access node. Furthermore, an area access information according to the present location of the user equipment is determined in the access node, optionally before reception of the subscriber group information. It is possible that only a single area access information exists for the total area covered by the access node or that different parts of the coverage area have a respective area access information. The area access information can be for example selected from a memory of the access node. The access granting of the user equipment to the radio access network is performed according to a logical combination of the subscriber group information and the area access information. The logical combination can be calculated in a processing system of the access node, e.g. as outlined below.

The granting or restriction of access can be performed in different ways. A straightforward alternative is to terminate the procedure during which the request for service processing was sent to the control node if the access to the area is forbidden, e.g. to terminate a connection set-up or a handover. Alternatively or in addition, the access node can provide a list of allowed or forbidden cells to the user equipment, i.e. a filtered list of neighboring cells instead of a list comprising all neighboring cells. In this case the user equipment can consider only allowed cells for access and also in signal quality measurements for handover preparation, i.e. a handover request to a forbidden cell will not be performed because the signal quality in that cell is not determined.

For the proposed method, the amount of signaling of information between the control node and the access node is low because only few bits corresponding to the particular user need to be signaled while information, e.g. tables, required for the determination of user groups are needed only in the control nodes. A record representing roaming agreements of the operator can remain at a single or few locations in the communication system, especially in the control nodes. This simplifies significantly the updating of any changes. Also it is not necessary to implement an analysis function for the user identification in the access nodes while the existing analysis function in the control node can be used for determining subscriber groups. Finally, it is possible to use the proposed method instead of checking whether a user equipment in idle mode is authorized for access to the communication system or in case that a corresponding check fails. The processing load for the checks in the nodes can be reduced in this way at the expense of increased signaling for requests to forbidden services. This option is advantageous in case of a small fraction of requests for forbidden services.

In a preferred embodiment of the method, an operator identification is determined in the control node from the identification of the user equipment and the subscriber group information is determined according to the operator identification. In this way, operator agreements can easily be transformed into data which can be processed in the communication system. Especially, an information on the roaming agreements for the operators can be stored, e.g. in the control node or in a central database accessible to the control node, and the subscriber group information is determined according to the information on the roaming agreements.

The subscriber group information is preferably enclosed in a reply to the request for service processing. Especially, said reply can be a common identification (ID) message or a relocation request message as defined in specification 3GPP 25.413. As the common ID message is sent at the connection set-up of a UMTS subscriber while the relocation request message is sent for any further handover in the connection, it is preferable that the subscriber group information is enclosed both in a common ID message and a relocation request message. Else a subsequent handover in a connection requires additional checks of access restrictions. Both the common ID message and the relocation request message precede the radio bearer establishment for the user equipment so that the handover procedure can be terminated before in case of a restricted access and unnecessary signaling for bearer establishment is avoided. However, it is also possible to include the subscriber group information into a bearer assignment request or a handover request, e.g. according to specification GSM 08.08 or 3GPP25.413. As the common ID message is not used in customary GSM networks, a sending and processing of the message according to UMTS specifications can be implemented for a GSM network as an alternative to using the assignment request and/or handover request messages according to the BSSAP (Base Station System Application Part) protocol for transmitting the subscriber group information.

It is also possible to store the subscriber group information in the control node or in a user record of a VLR associated with the control node to avoid a repeated calculation or in the access node to reduce the signaling. The determined subscriber group information can then be retrieved for any further determination of an access granting to the user equipment reducing the processing and/or signaling load.

In an advantageous embodiment of the method, at least one of the subscriber group information and the area access information is a bitmap which allows an effective transmission and processing of the information. For example, every bit from a first group of bits in the bitmap for the area access information can indicate a home subscriber of an operator, every bit from a second group of bits can indicate a subscriber of an external operator having a roaming agreement with a selected operator of the network. One bit can represent several operators for whom the same restrictions apply. Further groups of bits in the bitmap for the area access information may indicate if a user is entitled only for GSM or UMTS connections or allowed to still further services.

Preferably, both the subscriber group information and the area access information are bitmaps and the processing comprises a logical operation which is performed on the bitmaps. The granting or denial of an access is determined according to the result of the logical operation. Determining on the fact whether the bits of the bitmaps correspond to an allowed or restricted access, the logical operation can be for example an "AND" or an "OR" operation between corresponding bits. It is possible to perform different operations according to the position of a bit and to perform further processing upon the result of the logical operation.

The access node can control for example a UMTS radio access network or a GSM radio access network. In this case the access node can be for example an RNC (Radio Network Controller) or a base station controller (BSC). A control node in this case can be a mobile services switching center MSC for circuit switched connections, e.g. an MSC comprising the bearer processing for the connection or an MSC server controlling other nodes, e.g. a media gateway, handling the traffic bearer. For packet switched traffic to the user, the control node can be for example a GPRS Support Node (GSN).

Preferably, the granting or denial of access is determined in the access node. This avoids the circumvention of access restrictions by the user equipment and is especially efficient to achieve a low amount of signaling in the communication system.

Alternatively, the subscriber group information and the area access information can be transmitted to the user equipment and the access granting is determined in the user equipment. This can avoid any unnecessary signaling due to access attempts in case of forbidden access.

According to the invention, a control node for a communications system with a processing system is adapted to handle services for a user equipment and provided with an interface to exchange messages with an access node or with the user equipment or with both. The control node is also adapted to receive a request for service processing for the user equipment with an identification of the user equipment. The control node is adapted to determine a subscriber group information for the user equipment according to the identification and to send the subscriber group information to the access node.

An advantageous access node for a radio access network of a communications system is provided with a processing system adapted to determine whether to grant access of a user equipment to the radio access network in a present position of the user equipment, e.g. in a specific location area. The access node controls the access of the user equipment to the radio access network, e.g. to the corresponding target cells. The access node is provided with an interface to exchange messages with a control node handling services for the user equipment and with the user equipment. According to the invention, the access node is adapted to receive a subscriber group information and to determine an area access information according to the present location of the user equipment. It is possible that the same area access information applies to the total service area of the access node and that the area access information is stored for this purpose in a memory accessible to the processing system. The access node performs the access granting of the user equipment to the radio access network according to a logical combination of the subscriber group information and the area access information.

Both the control node and the access node can be used in any embodiment of the above method. The steps of the above method related to the respective nodes as well as the adaptations of the nodes according to the invention are preferably embodied by software executed in a processing system of the respective node. Therefore, the invention is also embodied by a program unit comprising code for performing either the steps of the above method which are executed in the access node or which are executed in the control node. The program unit according to the invention is for example stored on a data carrier or directly loadable into a processing system, e.g. as a sequence of signals.

The foregoing and other objects, features and advantages of the present invention will become more apparent in the following detailed description of preferred embodiments as illustrated in the accompanying drawings.

### Brief description of the drawings

Fig. 1 shows a first scenario for the sharing of networks between operators
Fig. 2 shows a second scenario for the sharing of networks between operators
Fig. 3 shows a network for performing a method according to the invention
Fig. 4 shows a first message sequence according to the invention
Fig. 5 shows a second message sequence according to the invention

### Detailed description of preferred embodiments of the invention

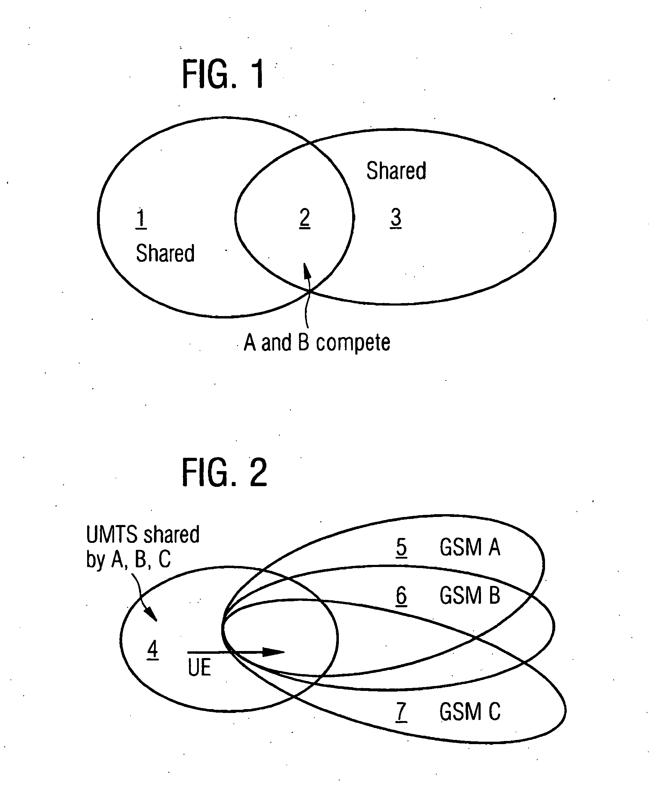

Figures 1 and 2 illustrate different shared network scenarios which are for example suitable for UMTS shared network solutions:
- In a Geographically Split Network operators each covering part of a region, for example a country, together provide access in the whole region.
- In a Common Shared Network, e.g. one, UMTS operator provides UMTS service for himself and further operators who operate only GSM networks.

In a geographically split network, user equipment subscribed to different operators is allowed access to a UTRAN (UMTS Terrestrial Radio Access Network) with different access restrictions for different areas 1, 2, 3 of this UTRAN. An example situation is shown in figure 1, in which operator A and B together to cover a whole region but compete in a middle area 2 where they both have coverage. The networks of Operator A and B have an equivalent access technology in this case, i.e. both provide UMTS access. User equipment subscribed to operator B is allowed in the whole area 1 of operator A except in the overlap area 2. In the overlap area 2, access of user equipment subscribed to operator B to operator A is restricted.

In the common shared network solution, there are no access restrictions for the subscribers of the operators A, B, C within a shared access network 4 but at the borders of the shared network 4, different neighboring GSM or UMTS cells from the individual access networks 5, 6, 7 of the operators have to be determined as possible target for a handover. Figure 2 illustrates a corresponding example in which UMTS operator A has allowed access to user equipment from operators B and C to his UMTS network. When a user equipment UE moves out of the UTRAN coverage of the shared network 4 into the GSM region of access networks 5, 6, 7 as indicated by the arrow, a GSM cell of the respective operator A, B, C should be the target for a handover. Generally, the situation is further complicated because roaming restrictions may exist, e.g. between operator C and operator B.

The neighboring access networks 5, 6, 7 in figure 2 are described above to be GSM networks but this is not required and they could also be UMTS networks. Even if there is more than one UMTS network involved, the common shared network case is different from a geographically split network for two reasons:
- In a geographically split network, the shared UMTS area is covered by equivalent access networks each with their own PLMN (Public Land Mobile Network)-identification, whereas for a common shared network, the shared UMTS area is covered by one access network with one PLMN-identification.
- In a geographically split network, access restrictions have to be considered within the shared area while in a common shared network, it may be necessary to check access restrictions at the boundary of the shared area to cells of neighboring networks and inside the shared area.

Real configurations may be combinations of these two cases. For example since equivalent access networks in the geographically split case will typically also have neighboring networks, the access granting checks for a common shared network may be also required at the boundary of the geographically split network. Therefore, a plurality of cases and situations which may change in time according to different agreements between the operators must be considered when granting access of a roaming user equipment to a network.

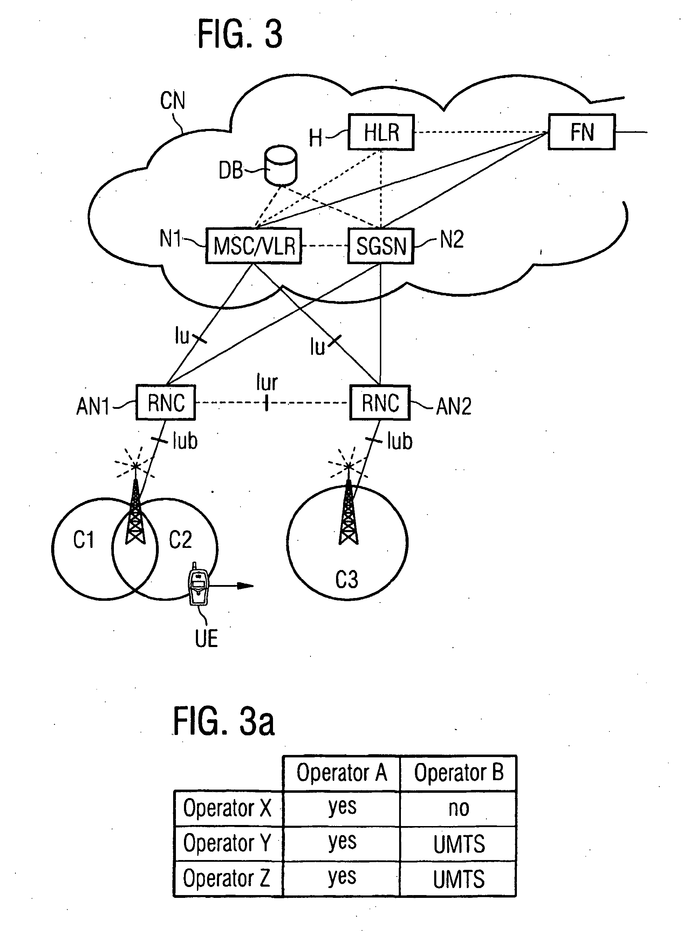

Figure 3 depicts nodes in a communication system involved in handling connections with user equipment and determining the granting of access to an access network which typically comprises access nodes AN1, AN2, e.g. an RNC or BSC, and radio base stations BS covering the radio access in different cells C1, C2, C3 through which a user equipment may roam. The RAN (Radio Access Network) is the part of the network that is responsible for the radio transmission and control of the radio connection. The RNC of the RAN controls radio resources and radio connectivity within a set of cells while a base station handles the radio transmission and reception within one or more cells covering a geographical area. The radio coverage in a cell is provided by radio base station equipment at the base station site and each cell is identified by a unique identity, which is broadcast in the cell. There may be more than one cell covering the same geographical area. The interfaces between the various nodes are indicated as lu, lub, and lur. The radio interface is sometimes referred to as the Uu interface.

A radio access network can comprise several access nodes, e.g. RNC. Therefore, on a per RAN-UE connection basis, the RNC can have the roles of an SRNC (Serving RNC) which is in charge of the connection with the user equipment, i.e., it controls the connection inside the RAN and provides the connection to the core network. Alternatively, an RNC may be a DRNC (Drift RNC) for a connection. In this role the RNC supports the SRNC with radio resources for a connection with the user equipment that needs radio resources in cells controlled by the DRNC. The RAN decides the role of an RNC (SRNC or DRNC) when the UE-RAN connection is established. Normally, the RNC that controls the cell where the connection to the user equipment is initially established is assigned the SRNC role for that connection. As the user equipment moves, the connection is maintained by establishing radio communication branches via new cells, possibly also involving cells controlled by another RNC (i.e., a DRNC). According to implementation, either an SRNC or a DRNC may be the access node in the method according to the invention.

In the core network CN of the communication system, control nodes N1, N2 handle services like connection requests and handling of location data for the user equipment UE, both for circuit and packet switched connections, The control nodes N1, N2 can therefore be for example an MSC/VLR or an SGSN, either as nodes processing both the payload and the signaling of the connection or as servers processing only the signaling and controlling bearer nodes for handling the payload. A plurality of further nodes FN may be part of the communication network, the further nodes controlling for example connections with further fixed or mobile terminals which may be the target for an originating connection from the user equipment or the target of a terminating connection. Control nodes N1, N2 and further nodes FN are adapted to contact a central location register, e.g. a home location register (HLR) H, holding an information of the present location of a user equipment, generally an identification of the respective control node. It is also possible to send messages between different control nodes N1, N2.

The proposed method concerns the signaling between a control node N1, N2 and an access node AN1, AN2 in connected mode, especially in shared networks. The control node N1, N2 can perform an analysis of a subscriber identification, e.g. an MSC or an SGSN have the possibility to perform an IMSI (International Mobile Subscriber Identity) series analysis. The outcome of this analysis is put in a bit map and signaled from the control node N1, N2 to the access node AN1, AN2 handling the connection, e.g. over the UMTS lu interface. The bitmap indicates the subscriber groups which are applicable for that particular subscriber. The bitmap can be for example 16 bits long but comprises preferably at least 32 or 64 bits, the actual number of bits being chosen according to the number of operators considered. A possible usage is that every bit indicates for a network operator, who shares the network either an own subscriber or an international roamer (UMTS and/or GSM roamer) of an operator.

The information about the operator agreements can be stored in a database DB, which can either be part of the control nodes CN or can be contacted by them as depicted in Fig. 3. An example for the contents of the database DB is shown in Figure 3a. For every operator of the communication system A, B, ... there are entries with which other operators roaming agreements exist. In the example, operator A has a roaming agreement with operators X, Y, Z while operator B has no roaming agreement with operator X and provides only access to his UMTS cells for user equipment subscribed to operators Y and Z. To simplify the IMSI analysis, the operators may be represented in the table by the respective mobile country codes and mobile network codes.

The subscriber group information is needed in the access node to allow or restrict a handover to another cell. Both the subscriber group information received from control node N1, N2 and the access information stored for the target cell of the handover in the access node AN1, AN2 are taken into consideration, i.e. the access node AN1, AN2 uses the information received from control node N1, N2 to decide if a handover to a particular cell C1 -C3 is allowed or not. Between a DRNC and an SRNC, the access information or the subscriber group information may be signaled over the lur interface. If a handover for the user equipment is not allowed to a particular cell, preferably no measurements are done to prepare a handover towards this cell. In this way, unnecessary signaling is avoided and the battery life of the user equipment is extended.

To determine access, the access node AN1, AN2 can apply a positive or a negative logic for the bitmap indicating the subscriber group information. For this purpose, the access node AN1, AN2 has stored information for the cells C1 - C3 or location areas and/or routing areas or for the whole service area, whether the access for a subscriber group corresponding to a bit in the bitmap is allowed or forbidden to the respective area. This information is preferably stored in a second bitmap denoted area access information.

For example, six operators A, B, C, D, E and F in a selected region, e.g. a country have sharing agreements, wherein identical restrictions apply to all subscribers of operator E and F. In this case the bitmap for the subscriber group information may comprise ten bits, E and F being represented by the same bits, the bits having the meaning
A/roam to A/B/roam to B/C/roam to C/D/roam to D/E or F/roam to E or F, i.e. a bit either indicates a home subscriber of the respective operator or a subscriber of a further operator having a roaming agreement with the respective operator. Roaming agreements can especially relate to a particular access network, e.g. only to UMTS cells. As an example for an international UMTS roamer of network A, who has also roaming agreement with B, but not with any of the other operators, the bitmap for the subscriber group information would be 0/1/0/1/0/0/0/0/0/0.

For the cell of the access network which is the target for a handover, a corresponding bitmap for the area access information defines which user groups have access to the cell. If a cell in the above example belongs to operator B and B is competing with all other operators in this cell, the bitmap 0/0/1/1/0/0/0/0/ 0/0 would indicate for which subscriber groups access is allowed, i.e. only for subscribers and international roamers of B.

To determine whether access to the respective cell is allowed for a subscriber, a logical AND operation is performed between both bitmaps, the result being 0/0/0/1/0/0/0/0/0/0 and an OR operation is performed to the bits of the resulting bitmap, giving 1 in this case. If the result is 1, a handover to this cell is possible, i.e. access to the user equipment is granted upon a request for handover. Else access is restricted and another cell needs to be selected for a handover. To avoid restrictions in case of signaling problems, e.g. due to different capabilities of nodes, access should be granted if the subscriber group information or the area access information can not be obtained.

Alternatively, it is also possible to apply a negative logic, i.e. to indicate those user groups in the bitmap for which no access is allowed, i.e. if a subscriber group is indicated, the user equipment does not have access and access is only permitted if the user does not belong to any restricted group. However, competing operators frequently have several roaming agreements. Often the competing operators sharing a network only allow own international roamers, i.e. user equipment subscribed to foreign operators with whom roaming contracts exist, but do not allow roamers of the other operators with whom they share the network. In this case an international roamer could have roaming agreements via his home operator with both operators A and B. Applying negative logic, the cell of operator A would be restricted to subscribers of the foreign operator with a roaming agreement of operator B. In this case, access should be allowed while a specification, e.g. of 3GPP, may require that access is forbidden if a restriction applies to any of the subscriber groups, i.e. access would be forbidden for the subscriber although he holds a roaming agreement with operator A as due to one restricted group, the access is not allowed. Therefore, additional operations on the bitmaps are required to consider such cases and allow access.

For the generation of the bitmap, information about the roaming agreements for all operators sharing a network is stored in a control node N1, N2 in the core network, e.g. in an MSC or SGSN. Alternatively or for updates, a server in the communication network can provide access to information on the roaming agreements for downloading of the corresponding data by the control node N1, N2. When a request for a handover or another service like a connection set-up or sending a short message (SMS) is received for a user equipment, the control node N1, N2 performs an analysis of the subscriber identification, e.g. an IMSI series analysis for determining to which operator a user equipment is subscribed.

In GSM and UMTS networks this is possible according to the definition of the IMSI comprising a mobile country code (MCC) and a mobile network code (MNC) in addition to the mobile subscriber number (MSN), i.e. IMSI(max 15 digits) = MCC(3 digits) + MNC(2 or 3 digits) + MSN In this way, the first digits of the IMSI indicate the operator. With this knowledge and the stored representations of the roaming agreements, the MSC sets the bitmap to indicate the subscriber group information of the subscriber, e.g. indicating if it is an own subscriber, for each of the operators sharing the network and indicating if the home operator of the subscriber has roaming agreements with any of the operators sharing the network, for each operator sharing the network.

It should be noted that in GSM and UMTS networks, location area identifications comprise bits corresponding to MCC, MNC, location area code (LAC) while the bits of cell identifications correspond to MCC, MNC, LAC and cell identity. According to this definition, in one location area there are only cells of one operator.

For signaling the bitmap indicating the subscriber group information to the access node AN1, AN2 which performs the logical operation to determine the access granting or restrictions, the Common ID message and the Relocation Request message according to GSM and UMTS specifications are preferable messages.

The purpose of the Common ID message in networks according to the state of the art is paging coordination in an RNC of the access network, i.e. to avoid unnecessary paging if a user equipment can have several connections, e.g. a circuit switched connection and a packet switched connection. The Common ID message is always sent to the RNC after a subscriber is authenticated and comprises the IMSI in addition to the bitmap according to the proposed method. If selective authentication is used, i.e. an authentication procedure is omitted in a message flow for resource saving, the Common ID message is sent after the point in time where the authentication would be done. This applies for mobile originating or mobile terminating connections and services as well as for SMS and USSD (Unstructured Supplementary Service Data) signaling.

After the first service or handover took place, the new access node AN1, AN2 may initiate a further handover. To allow the selection of an appropriate cell, the new access node AN1, AN2 is also provided with the subscriber group information. For this purpose, the Relocation Request message according to UMTS specifications is advantageous.

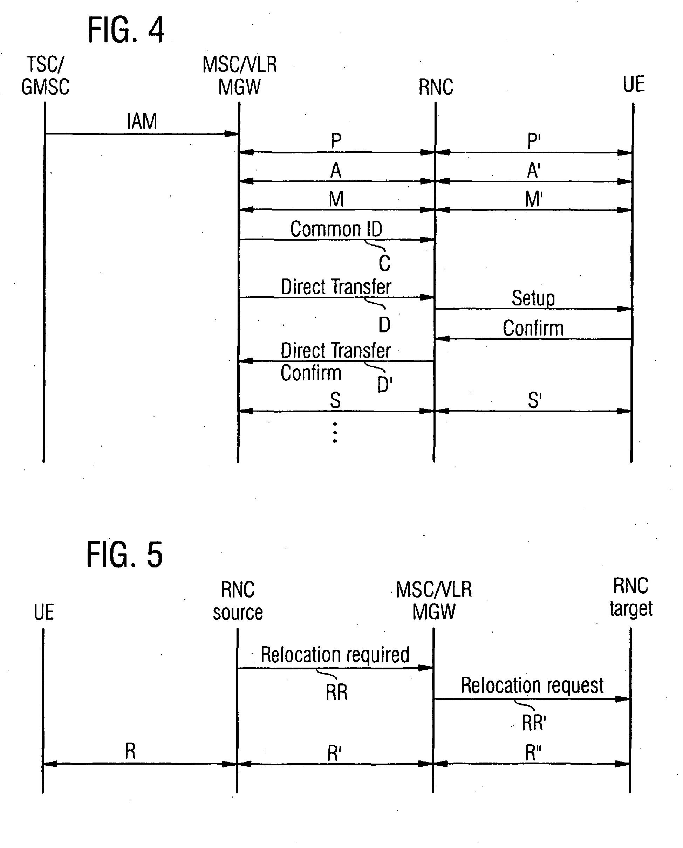

Figures 4 and 5 show examples of signaling procedures in a method according to the invention. In both figures, examples for the devices involved in the signaling are indicated at the top of the vertical lines. Double-headed arrows indicate procedures which comprise two or more messages between the involved devices. More detail on the messages can be found in the 3GPP specifications of the 3^{rd} Generation Partnership Project, especially in specification 3GPP 25.413 V4.1.0.

Figure 4 shows a signaling for a mobile terminating call which is initiated with an initial address message IAM from a transit switching center (TSC) or a gateway MSC (GMSC). After a paging procedure P, P' an authentication A, A' of the user equipment is performed followed by a mode procedure M, M' for setting transmission mode parameters. Then the common ID message C is sent, comprising the subscriber group information as described above as a bitmap. Furthermore, the common ID message C indicates to the RNC that a connection to the user equipment already exists and a paging, e.g. due to a further connection request from an SGSN, is not required.

In an alternative embodiment of the invention, the subscriber group information can be included in the direct transfer message D initiating the connection set-up procedure S, S'. The advantage of the former option is that it requires less signaling in case of restricted access, i.e. the set-up is terminated earlier. Furthermore, the common ID message C is sent from the MSC to the RNC both for a mobile originating and a mobile terminating connection. In contrast, the direct transfer message D and the corresponding confirmation D' are sent in the opposite direction between RNC and MSC for a connection originating from the user equipment UE. Therefore, a subdivision between mobile originating and terminating connections would be required to determine whether the subscriber group information has to be included in the direct transfer message D or the confirmation D'. Finally, the further call set-up S, S' proceeds if the processing of the subscriber group information and the area access information has the result that the user equipment is allowed for connections or services in the radio access network. Else the procedure is terminated.

In a further alternative embodiment, the subscriber group information can be included in an assignment message requesting bearer establishment during the connection set-up procedure S, S'. This alternative has the advantage that the assignment message is always sent form the control node to the access node. However, if the procedure is terminated at this point in time, much unnecessary signaling is performed.

For a subsequent handover during the connection from a source RNC to a target RNC, an advantageous message flow is depicted in figure 5. The message flow is initiated by a message "relocation required" RR from the source RNC presently controlling the radio connection to the MSC controlling the connection for the access network. In turn the MSC sends a message "relocation request" RR' to the target RNC which can be determined for example due to transmitted measurement results for the connection quality form the user equipment.

According to the invention, the bitmap representing the subscriber group information is included in the relocation request RR'. The further relocation procedure R, R' proceeds only if the processing of the subscriber group information and the area access information stored in the RNC has the result that the user equipment is allowed for connections or services in the present location by the radio access network. Else the procedure is terminated. In this case the a different target RNC needs to be selected and a further relocation procedure initiated.

Both after the message flow in figure 4 and 5, preferably the access node provides a filtered list of neighboring cells to the user equipment to avoid that quality measurements on restricted cells are performed for further handover preparation., i.e. cells can be removed from a list of neighboring cells if access will not be granted. For any subsequent handover, restricted cells can be ruled out in this way as possible targets, reducing battery consumption in the mobile phone and avoiding unnecessary signaling.

If the access restriction is performed by cell filtering, a list of neighbor cells adapted to the specific user equipment's subscription can be provided. To filter the list of all neighbor cells down to those cells appropriate, again subscriber group information is considered along with area access information about the neighbor cells. The home network of the mobile can be determined from the IMSI. In addition, the network to which a neighbor cell belongs is part of the UTRAN cell identity stored in the DRNC and transferred to the SRNC.

In an example method for implementing the invention, based on available mobile subscriber information, it is determined which networks identified by PLMN codes represented by mobile country code and mobile network code may be accessed by the subscriber. A filtering of the list of neighbor cells is performed to limit the list to those cells consistent with the user's subscription and the filtered neighbor cell list is sent to the mobile using standard signaling.

The control node determines the allowed networks of the subscriber, e.g. as a list of MCC+MNC or as subscriber group information represented by a bitmap, and passes the allowed networks to the SRNC over the lu interface in the common ID message. The SRNC can forward the allowed networks over the lur interface to the DRNC which performs filtering. If the filtering is performed in an SRNC, the control node again passes the allowed networks or subscriber group information to the SRNC over the lu interface in the common ID message. The DRNC sends the full list of neighbor cells over lur and the SRNC performs filtering of the cell list received from the DRNC.

In principle, the combination of the subscriber group information and the area access information can also be done in the user equipment or in the control node. For example, an alternative solution uses national roaming restrictions in the MSC which also administers the restricted location areas per subscriber group. The method for access granting is then implemented in the MSC and location areas are ruled out for handover, if access is not allowed for the subscriber. Then only those location areas which are allowed for the user equipment are indicated to the RNC to prepare the handover. However, the proposed solution is especially resource efficient and avoids unnecessary signaling.

It is possible that an inter-MSC handover is required during a connection from an anchor MSC outside the communication system to a target control node in the system. The anchor MSC may be a control node not adapted to perform the proposed method or lacking information on the roaming agreements to determine the subscriber group information. According to UMTS and GSM specifications, the anchor control node outside the shared communication system processes any services for the user equipment while the target control node adapted to the proposed method would only relay messages to the access node. In this case, the target control node can amend the relayed messages by the subscriber group information or signal the subscriber group information to the anchor control node of the inter-MSC handover for inclusion into messages.

The above embodiments admirably achieve the objects of the invention. However, it will be appreciated that departures can be made by those skilled in the art without departing from the scope of the invention which is limited only by the claims.

## Claims

1. Method for determining whether to grant access of a user equipment (UE) to a radio access network in a present position of the user equipment (UE) within a communications system, the communications system comprising a control node (N1, N2) handling services for the user equipment (UE) and an access node (AN1, AN2) controlling the access network, the method comprising the steps of
- receiving a request for service processing for the user equipment (UE) in the control node (N1, N2) with an identification of the user equipment (UE),
- determining a subscriber group information for the user equipment (UE) according to the identification of the user equipment (UE),
- sending the subscriber group information to the access node (AN1, AN2),
- determining an area access information according to the present location of the user equipment (UE) in the access node (AN1, AN2),
and performing the access granting of the user equipment (UE) to the radio access network according to a logical combination of the subscriber group information and the area access information.

2. Method according to claim 1, wherein an operator identification is determined in the control node (N1, N2) from the identification of the user equipment (UE) and the subscriber group information is determined according to the operator identification.

3. Method according to claim 1 or 2, wherein an information on the roaming agreements for the operators is stored and the subscriber group information is determined according to the information on the roaming agreements.

4. Method according to any preceding claim, wherein the subscriber group information is enclosed in a reply to the request for service processing.

5. Method according to claim 4, wherein the reply is any message from a group comprising a common identification message (C), a relocation request (RR'), a handover request or a bearer assignment request.

6. Method according to any preceding claim, wherein the determined subscriber group information is stored and retrieved for a further determination of an access granting to the user equipment (UE).

7. Method according to any preceding claim, wherein at least one of the subscriber group information and the area access information is a bitmap.

8. Method according to claim 7, wherein a logical operation is performed on the bitmaps and the access granting is determined according to the result of the logical operation.

9. Method according to any preceding claim, wherein the access granting is determined in the access node (AN1, AN2).

10. Method according to any of the claims 1 to 9, wherein the subscriber group information and the area access information are transmitted to the user equipment (UE) and wherein the access granting is determined in the user equipment (UE).

11. Method according to any preceding claim, wherein the access node (AN1, AN2) controls a UMTS radio access network or a GSM radio access network.

12. Method according to any preceding claim, wherein the access node (AN1, AN2) is a radio network controller and wherein the control node (N1, N2) is a mobile services switching center or a GPRS Support Node.

13. Communication network comprising means for carrying out all the steps of the method according to any preceding claim.

14. Control node (N1, N2) for a communications system with a processing system adapted to handle services for a user equipment (UE) and provided with an interface to exchange messages with an access node (AN1, AN2) and/or with the user equipment (UE), wherein the control node (N1, N2) is adapted to receive a request for service processing for the user equipment (UE) with an identification of the user equipment (UE), **characterized in that** the control node (N1, N2) is adapted to determine a subscriber group information for the user equipment (UE) according to the identification and to send the subscriber group information to the access node (AN1, AN2).

15. Access node (AN1, AN2) for a radio access network of a communications system with a processing system adapted to determine whether to grant access of a user equipment (UE) to the radio access network in a present position of the user equipment (UE) and to control the access and provided with an interface to exchange messages with a control node (N1, N2) handling services for the user equipment (UE) and with the user equipment (UE), **characterized in that**
the access node (AN1, AN2) is adapted to receive a subscriber group information,
the access node (AN1, AN2) is adapted to determine an area access information according to the present location of the user equipment (UE), and to perform the access granting of the user equipment (UE) to the radio access network according to a logical combination of the subscriber group information and the area access information.

16. Program unit comprising code for performing either the steps of a method according to any of the claims 1 to 12 which are executed in the access node (AN1, AN2) or which are executed in the control node (N1, N2).

## Patentansprüche

1. Verfahren zur Bestimmung, ob Zugang einer Benutzereinrichtung (UE) zu einem Funkzugangsnetz in einer gegenwärtigen Position der Benutzereinrichtung (UE) innerhalb eines Kommunikationssystems gewährt werden soll, wobei das Kommunikationssystem einen Steuerknoten (N1, N2), der Dienste für die Benutzereinrichtung (UE) abwickelt, und einen Zugangsknoten (AN1, AN2) umfasst, der das Zugangsnetz steuert, wobei das Verfahren die folgenden Schritte umfasst:
- Empfangen einer Anfrage für Dienstverarbeitung für die Benutzereinrichtung (UE) im Steuerknoten (N1, N2) mit einer Identifikation der Benutzereinrichtung (UE),
- Bestimmen einer Teilnehmergruppeninformation für die Benutzereinrichtung (UE) gemäß der Identifikation der Benutzereinrichtung (UE),
- Senden der Teilnehmergruppeninformation an den Zugangsknoten (AN1, AN2),
- Bestimmen einer Bereichszugangsinformation gemäß dem gegenwärtigen Aufenthaltsort der Benutzereinrichtung (UE) im Zugangsknoten (AN1, AN2), und
- Durchführen der Zugangsgewährung der Benutzereinrichtung (UE) zum Funkzugangsnetz gemäß einer logischen Kombination der Teilnehmergruppeninformation und der Bereichszugangsinformation.

2. Verfahren nach Anspruch 1, wobei eine Betreiberidentifikation im Steuerknoten (N1, N2) aus der Identifikation der Benutzereinrichtung (UE) bestimmt wird, und die Teilnehmergruppeninformation gemäß der Betreiberidentifikation bestimmt wird.

3. Verfahren nach Anspruch 1 oder 2, wobei eine Information über Roaming-Vereinbarungen für die Betreiber gespeichert wird, und die Teilnehmergruppeninformation gemäß der Information über die Roaming-Vereinbarungen bestimmt wird.

4. Verfahren nach einem vorhergehenden Anspruch, wobei die Teilnehmergruppeninformation in einer Antwort auf die Anfrage für Dienstverarbeitung eingeschlossen wird.

5. Verfahren nach Anspruch 4, wobei die Antwort eine beliebige Nachricht aus einer Gruppe ist, die eine gemeinsame Identifikationsnachricht (C), eine Verlegungsanfrage (RR'), eine Handover-Anfrage oder eine Trägerzuweisungsanfrage umfasst.

6. Verfahren nach einem vorhergehenden Anspruch, wobei die bestimmte Teilnehmergruppeninformation gespeichert und für eine weitere Bestimmung einer Zugangsgewährung für die Benutzereinrichtung (UE) abgerufen wird.

7. Verfahren nach einem vorhergehenden Anspruch, wobei mindestens eine von der Teilnehmergruppeninformation und der Bereichszugangsinformation eine Bitmap ist.

8. Verfahren nach Anspruch 7, wobei eine logische Operation an den Bitmaps durchgeführt wird, und die Zugangsgewährung gemäß dem Ergebnis der logischen Operation bestimmt wird.

9. Verfahren nach einem vorhergehenden Anspruch, wobei die Zugangsgewährung im Zugangsknoten (AN1, AN2) bestimmt wird.

10. Verfahren nach einem der Ansprüche 1 bis 9, wobei die Teilnehmergruppeninformation und die Bereichszugangsinformation an die Benutzereinrichtung (UE) gesendet werden, und wobei die zugangsgewährung in der Benutzereinrichtung (UE) bestimmt wird.

11. Verfahren nach einem vorhergehenden Anspruch, wobei der Zugangsknoten (AN1, AN2) ein UMTS-Funkzugangsnetz oder ein GSM-Funkzugangsnetz steuert.

12. Verfahren nach einem vorhergehenden Anspruch, wobei der Zugangsknoten (AN1, AN2) eine Funknetzsteuerung ist, und wobei der Steuerkoten (N1, N2) eine Mobildienstvermittlungsstelle oder ein GPRS-Unterstützungsknoten ist.

13. Kommunikationsnetz, umfassend Mittel zum Ausführen aller Schritte des Verfahrens nach einem vorhergehenden Anspruch.

14. Steuerknoten (N1, N2) für ein Kommunikationssystem mit einem Verarbeitungssystem, das so ausgelegt ist, dass es Dienste für eine Benutzereinrichtung (UE) abwickelt, und mit einer Schnittstelle zum Austauschen von Nachrichten mit einem Zugangsknoten (AN1, AN2) und/oder mit der Benutzereinrichtung (UE) versehen ist, wobei der Steuerknoten (N1, N2) so ausgelegt ist, dass er eine Anfrage für Dienstverarbeitung für die Benutzereinrichtung (UE) mit einer Identifikation der Benutzereinrichtung (UE) empfängt, **dadurch gekennzeichnet, dass**
der Steuerknoten (N1, N2) so ausgelegt ist, dass er eine Teilnehmergruppeninformation für die Benutzereinrichtung (UE) gemäß der Identifikation bestimmt und die Teilnehmergruppeninformation an den Zugangsknoten (AN1, AN2) sendet.

15. Zugangsknoten (AN1, AN2) für ein Funkzugangsnetz eines Kommunikationssystems mit einem Verarbeitungssystem, das so ausgelegt ist, dass es bestimmt, ob Zugang einer Benutzereinrichtung (UE) zum Funkzugangsnetz in einer gegenwärtigen Position der Benutzereinrichtung (UE) gewährt werden soll, und den Zugang steuert, und mit einer Schnittstelle zum Austauschen von Nachrichten mit einem Steuerknoten (N1, N2), der Dienste für die Benutzereinrichtung (UE) abwickelt, und mit der Benutzereinrichtung (UE) versehen ist, **dadurch gekennzeichnet, dass**
der Zugangsknoten (AN1, AN2) so ausgelegt ist, dass er eine Teilnehmergruppeninformation empfängt,
der Zugangsknoten (AN1, AN2) so ausgelegt ist, dass er eine Bereichszugangsinformation gemäß dem gegenwärtigen Aufenthaltsort der Benutzereinrichtung (UE) bestimmt,
die Zugangsgewährung der Benutzereinrichtung (UE) zum Funkzugangsnetz gemäß einer logischen Kombination der Teilnehmergruppeninformation und der Bereichszugangsinformation durchführt.

16. Programmeinheit, umfassend Code zum Ausführen entweder der Schritte, welche im Zugangsknoten (AN1, AN2) ausgeführt werden, oder, welche im Steuerknoten (N1, N2) ausgeführt werden, eines Verfahrens nach einem der Ansprüche 1 bis 12.

## Revendications

1. Procédé pour déterminer d'accorder l'accès d'un équipement d'utilisateur (UE) à un réseau d'accès radio dans une position actuelle de l'équipement d'utilisateur (UE) à l'intérieur d'un système de communication, le système de communication comprenant un noeud de commande (N1, N2) gérant des services pour l'équipement d'utilisateur (UE) et un noeud d'accès (AN1, AN2) commandant le réseau d'accès, le procédé comprenant les étapes consistant à :
- recevoir une demande de traitement de service pour l'équipement d'utilisateur (UE) dans le noeud de commande (N1, N2) avec une identification de l'équipement d'utilisateur (UE),
- déterminer une information de groupe d'abonné pour l'équipement d'utilisateur (UE) selon l'identification de l'équipement d'utilisateur (UE),
- envoyer l'information de groupe d'abonné au noeud d'accès (AN1, AN2),
- déterminer une information d'accès de zone selon la position actuelle de l'équipement d'utilisateur (UE) dans le noeud d'accès (A1, AN2), et
- effectuer l'accord d'accès de l'équipement d'utilisateur (UE) au réseau d'accès radio selon une combinaison logique de l'information de groupe d'abonné et de l'information d'accès de zone.

2. Procédé selon la revendication 1, dans lequel une identification d'opérateur est déterminée dans le noeud de commande (N1, N2) d'après l'identification de l'équipement d'utilisateur (UE) et l'information de groupe d'abonné est déterminée selon l'identification d'opérateur.

3. Procédé selon la revendication 1 ou 2, dans lequel l'information relative aux accords itinérants pour les opérateurs est mémorisée et l'information de groupe d'abonné est déterminée selon l'information relative aux accords itinérants.

4. Procédé selon une quelconque des revendications précédentes, dans lequel l'information de groupe d'abonné est incluse dans une réponse à la demande de traitement de service.

5. Procédé selon la revendication 4, dans lequel la réponse est un quelconque message dans un groupe comprenant un message d'identification commun (C), une demande de repositionnement (RR'), une demande de transfert intercellulaire ou une demande d'assignation de support.

6. Procédé selon une quelconque des revendications précédentes, dans lequel l'information de groupe d'abonné déterminée est mémorisée et extraite en vue d'une future détermination d'un accès accordé à l'équipement d'utilisateur (UE).

7. Procédé selon une quelconque des revendications précédentes, dans lequel au moins une de l'information de groupe d'abonné et l'information d'accès de zone est un bitmap.

8. Procédé selon la revendication 7, dans lequel une opération logique est effectuée sur les bitmaps et l'accord d'accès est déterminé selon le résultat de l'opération logique.

9. Procédé selon une quelconque des revendications précédentes, dans lequel l'accord d'accès est déterminé dans le noeud d'accès (AN1, AN2).

10. Procédé selon une quelconque des revendications 1 à 9, dans lequel l'information de groupe d'abonné et l'information d'accès de zone sont transmises à l'équipement d'utilisateur (UE) et dans lequel l'accord d'accès est déterminé dans l'équipement d'utilisateur (UE).

11. Procédé selon une quelconque des revendications précédentes, dans lequel le noeud d'accès (AN1, AN2) commande un réseau d'accès radio UMTS ou un réseau d'accès radio GSM.

12. Procédé selon une quelconque des revendications précédentes, dans lequel le noeud d'accès (AN1, AN2) est un contrôleur de radioréseau et dans lequel le noeud de commande (N1, N2) est un centre de commutation pour les services mobiles ou un noeud de support GPRS.

13. Réseau de communication comprenant un moyen pour exécuter toutes les étapes du procédé selon une quelconque des revendications précédentes.

14. Noeud de commande (N1, N2) pour un système de communication avec un système de traitement adapté pour gérer des services pour un équipement d'utilisateur (UE) et pourvu d'une interface pour échanger des messages avec un noeud d'accès (AN1, AN2) et/ou avec l'équipement d'utilisateur (UE), dans lequel le noeud de commande (N1, N2) est adapté pour recevoir une demande de traitement de service pour l'équipement d'utilisateur (UE) avec une identification de l'équipement d'utilisateur (UE), **caractérisé en ce que** le noeud de commande (N1, N2) est adapté pour déterminer une information de groupe d'abonné pour l'équipement d'utilisateur (UE) selon l'identification et envoyer l'information de groupe d'abonné au noeud d'accès (AN1, AN2).

15. Noeud d'accès (AN1, AN2) pour un réseau d'accès radio d'un système de communication avec un système de traitement adapté pour déterminer d'accorder l'accès d'un équipement d'utilisateur (UE) au réseau d'accès radio dans une position actuelle de l'équipement d'utilisateur (UE) et commander l'accès et pourvu d'une interface pour échanger des messages avec un noeud de commande (N1, N2) gérant des services pour l'équipement d'utilisateur (UE) et avec l'équipement d'utilisateur, **caractérisé en ce que** le noeud d'accès (AN1, AN2) est adapté pour recevoir une information de groupe d'abonné,
le noeud d'accès (AN1, AN2) est adapté pour déterminer une information d'accès de zone selon la position actuelle de l'équipement d'utilisateur (UE) et effectuer l'accord d'accès de l'équipement d'utilisateur (UE) au réseau d'accès radio selon une combinaison logique de l'information de groupe d'abonné et l'information d'accès de zone.

16. Unité de programme comprenant du code pour exécuter l'une ou l'autre des étapes d'un procédé selon une quelconque des revendications 1 à 12 qui sont exécutées dans le noeud d'accès (AN1, AN2) ou qui sont exécutées dans le noeud de commande (N1, N2).
